# EUROPEAN PATENT SPECIFICATION

(11) **EP 0 545 571 B1**
(45) Date of publication and mention of the grant of the patent: **21.02.1996**
(21) Application number: 92310451.7
(22) Date of filing: 16.11.1992
(51) Int. Cl.: F16F 1/40, E04H 9/02

(54) **Combination comprising a structure and a vibration control device for the structure, using laminated rubber support**
Kombination einer Struktur und einer Vorrichtung zur Schwingungskontrolle an der Struktur unter Verwendung einer Lagerung aus Gummilaminat
Combinaison d'un dispositif pour le contrôle des vibrations d'une structure et ladite structure avec l'utilisation d'un support en caoutchouc

(30) Priority: 15.11.1991 JP 300409/91
(43) Date of publication of application: 09.06.1993
(73) Proprietor: KAJIMA CORPORATION, Tokyo 107 (JP)
(72) Inventor: Koshika, Norihide, c/o Kajima Corporation, Tokyo 107 (JP); Sakamoto, Mitsuo, c/o Kajima Corporation, Tokyo 107 (JP); Nishimura, Isao, c/o Kajima Corporation, Tokyo 107 (JP); Sasaki, Katsuyasu, c/o Kajima Corporation, Tokyo 107 (JP); Oorui, Satoshi, c/o Kajima Corporation, Tokyo 107 (JP)
(74) Representative: Godwin, Edgar James

(56) References cited:
- EP-A- 0 380 304
- BE-A- 648 388
- DE-B- 1 264 876
- FR-A- 762 631
- FR-A- 1 534 995
- US-A- 4 593 501
- US-A- 4 950 528

## Description

This invention relates to a laminated rubber support used in a vibration control device such as a dynamic damper for controlling the vibration of a structure.

As a base isolation structure for trying to reduce each earthquake input into a superstructure or the like, a variety of structures using a laminated rubber support have conventionally been developed [Newly Opened Model Facilities "Base Isolation Buildings" are now onstage (refer to the Nikkei Architecture, the issue of July 14, 1986, pp. 54-75)]. Of all conventional laminated rubber supports, the most general item is given by superposing each steel plate on each rubber in an alternate manner and providing connection plates installed to a superstructure of a lower structure such as a foundation at upper and lower portions of the superposition. Furthermore, there are laminated rubber supports in which high damping rubbers are used or lead plug dampers are contained.

Conventionally, a solid laminated rubber used in a base isolation structure gives deformation ability in a same degree with that in a height thereof, but a damper thereof has to be made very small in order to reduce shearing stiffness. Therefore, it has been difficult to complete both large deformation and low shearing stiffness at a same time.

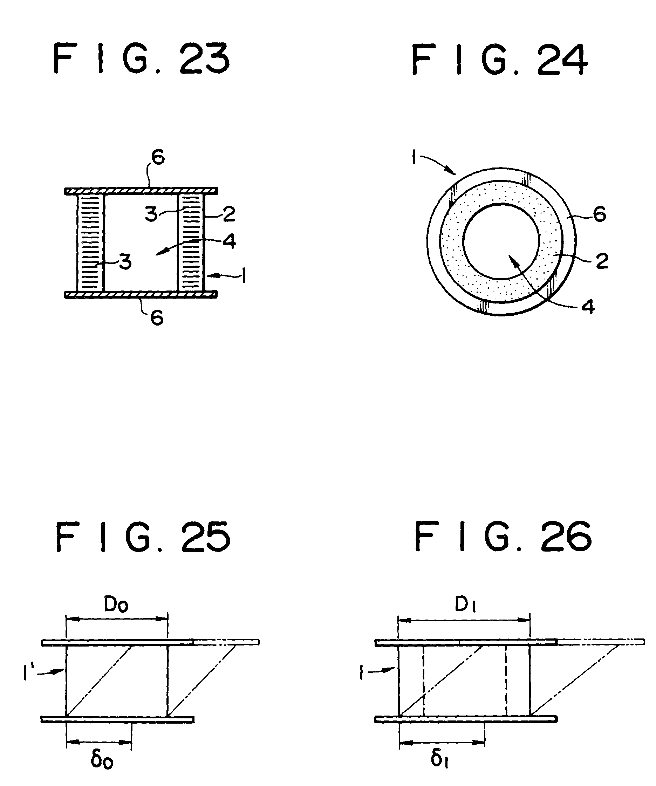

As shown in Figs. 23 and 24, it has been considered to try to reduce shearing stiffness and to develop deformation ability by forming a laminated rubber 1 in a ring shape and making an internal portion thereof hollow. In this case, a laminated rubber having a long period and a small shearing stiffness becomes possible. There is, however, a problem that the resulting buckling strength is reduced due to the hollowness.

Furthermore, a mechanism is known which completes a laminated rubber support having a large deformation ability and a low shearing stiffness by connecting the laminated rubbers of a small element, which are obtained by miniaturizing usual laminated rubbers, to each other in multistage through upper and lower connection plates. There is, however, another problem that the member of the elements becomes too many.

With reference to the uses other than the base isolation structures, it can be considered to utilize laminated rubbers, e.g., as a spring element in a passive type vibration control device (designated as DD thereafter) such as a dynamic damper, as a spring element or a supporting device in an active type vibration control device for actively controlling the vibration of a structure by applying control forces such as oil pressure due to an actuator and electromagnetic force or the like. In these vibration control devices, normally, the natural period of a spring is synchronized with the natural period of a structure or it is set to be a period longer than the natural period of the structure (e.g., in case of using the vibration control device as a supporting device). A large stroke becomes necessary for getting a large seismic response control effect by a compact device. For example, an active type vibration control device disclosed in Japanese Pat. Laid-open No. 1-275866 is constituted by suspending a weight to support by use of a hanger material as a supporting device, instead of using a spring, and exciting the weight by means of an actuator in accordance with the response from a building against earthquake or the like. In the suspending mode, however, there is a problem that the resulting movement in a vertical direction is also enlarged accordingly as the stroke becomes larger. In addition, when the natural period of a structure as a seismic response control object becomes longer, it will be hard to use the laminated rubbers having the period matching to such a constitution as described above. Furthermore, in case of vibrating the weight by means of the actuator as described in the active type vibration control device, there is still a further problem that the vibration due to the drive is transmitted to the structure, resulting in the transmission of noise and uncomfortable vibration in the neighborhood of the floor installed with the vibration control device as well.

EP-A-0 380 304 discloses a vibration isolating support interposed between a flow slab and a movable flow panel. The support comprises an air spring and a multiple laminated rubber assembly which are vertically stacked and integrally connected to each other. The laminated rubber assembly is formed by connecting laminated rubbers to each other in a plurality of stages in a vertical direction by means of horizontal connection plates.

In one aspect the invention is concerned with a combination as defined by the preamble of claim 1.

In another aspect the invention is concerned with a combination as defined by the preamble of claim 2.

In a further aspect the invention is concerned with a combination as defined by the preamble of claim 5.

Such combinations are disclosed in JP-A-63-156171.

The present invention is defined by the independent claims 1, 2 and 5.

Each hollow laminated rubber has the advantage that the shearing stiffness thereof is small and the deformation ability thereof is larger, in comparison with those of each solid laminated rubber. Therefore, a predetermined small shearing stiffness and stroke can be completed by connecting the hollow laminated rubbers on a plurality of states and with fewer elements and stages, in comparison with the case of connecting the conventional solid laminated rubbers in multistage through the connection plates or horizontal connection plates above and below the laminted rubbers.

The laminated rubbers may have the same diameter. Alternatively, the outer diameters of the upper laminated rubbers may be less than those of the lower laminated rubbers; more stabilized support is obtained and even the buckling strength can further be improved. It is possible to make the laminated rubbers all hollow. However, even in the case where solid laminated rubbers are partially used, a predetermined small shearing stiffness (long periodization) and stroke enlargement can be achieved by making some laminated rubbers hollow with fewer elements than if the laminated rubbers were all solid.

A vibration control device of the present invention uses the laminated rubber support described above as a spring element (e.g., springs for keeping neutral positions) in a passive or active type vibration control device.

In case of using the laminated rubber supports in DD, DD can be constituted by disposing the laminated rubber support (usually in a plural form) at a predetermined position of the structure as a seismic response control object and mounting an additional mass body of a predetermined mass m_{d} on the laminated rubber support. It is considered that the mass m_{d} of the additional mass body is normally within the range of 1/50 to 1/100 of a mass mₗ of the structure. By use of the laminated rubber support obtained by connecting the hollow laminated rubbers on a plurality of stages, a spring (spring constant k_{d}) having a large deformation ability in a horizontal direction is formed at a long period corresponding to the natural period of the structure, and the spring can be applied to multi-storied buildings, or the like.

As an active type vibration control device, for example, the following types can be listed.
(a) What intervenes an actuator for applying a control force u(t) corresponding to the vibration of the structure between the structure having a mass m₁ and the additional mass body having a predetermined mass m_{d} (designated as AMD thereafter).
(b) What intervenes a spring having a predetermined spring constant k_{d} between the structure and the additional mass body in the construction of above description (a) and synchronizes the period in case of freely vibrating the additional mass body with the natural period of the structure (designated as HMD thereafter).
(c) What has such a construction as DD is doubly overlapped on AMD or HMD (designated as DMD thereafter), i.e., what further provides a second additional mass body having a predetermined mass m_{d} for an additional mass body (i.e., a first additional mass body) having a predetermined mₐ and allows to act a control force u(t) between the first additional mass body and the second additional mass body in the construction of DD (refer to e.g., Japanese Pat. Laid-open No. 63-156171), further synchronizes the periods of the first additional mass body and the second additional mass body with the natural period of the structure using a spring (spring constant k_{b}).

Also in case of the active type vibration control device, the laminated rubber supports (usually in a plural form) obtained by connecting the hollow laminated rubbers on a plurality of stages are installed to a predetermined position of the structure as a seismic response control object and the additional mass body having the predetermined mass m_{d} (or mₐ) is mounted on the laminated rubber supports, in similar to the case of DD. In case of AMD, the laminated rubber supports are preferably used which support the additional mass body in a vertical direction, functionate as a spring for keeping a neutral position with respect to a horizontal direction, and should have a fully longer period than the natural period of the structure not so as to give any obstacles when the control force u(t) is acted.

HMD is arranged to cancel a part of an inertial force acting on the additional mass body by adding a term corresponding to the spring to the control force so that the additional mass body can be vibrated by a less control force. In this case, the period of the laminated rubber support should be coincided with the natural period of the structure.

In addition, DMD also supports the first additional mass body by means of the laminated rubber support (spring constant kₐ) coincided with the natural period of the structure, and a large damping effect can be obtained by a small control force in case of adding the control force to the second additional mass body.

Furthermore, there are still noise and vibration problems when driven in the active type vibration control device utilizing the actuator. However, these noise and vibration problems in the neighborhood of the floor installed with the vibration control device are reduced since the additional mass body is supported by the laminated rubber supports.

By using the present invention, it is possible to provide a laminated rubber support having a small shearing stiffness and a long period highly stabilized against a large deformation by the superposition of hollow laminated rubbers in multistage through connection plates.

It is also possible to provide a readily producible laminated rubber support which can easily adjust a spring constant thereof in a horizontal direction by the number of the laminated rubbers to be loaded in a vertical direction.

It is also possible to provide a passive or active type vibration control device which constitutes a spring element having a long period and a large stroke by the use of the above-described laminated rubber supports, and is suitable to a structure having a long period such as a multi-storey building.

It is also possible to provide a vibration control device which can reduce the influences of noise and vibration on the neighborhood of the floor installed with the vibration control device by supporting an additional mass body using the above-described laminated rubber supports as a spring element.

It is also possible to provide a vibration control device which is suitable to a structure having a small friction and a long period by using the above-described laminated rubber supports.

It is also possible to provide a compact vibration control device having a simplified construction by using the above-described laminated rubber supports as a spring element.

The foregoing and other features and advantages of the invention will become apparent from the following description with reference to the accompanying drawings, in which:
Figs. 1 through 3 are front views showing laminated rubber supports suitable for use in the present invention, respectively;
Fig. 4 is a horizontal sectional view of the preferred embodiment of Fig. 3;
Figs. 5 through 8 are schematic views showing vibration control devices of the the present invention, respectively;
Fig. 9 is a vertical sectional view showing a laminated rubber of a non-uniform sectional type;
Fig. 10 is a horizontal sectional view showing a vertical center portion of the laminated rubber of Fig. 9;
Fig. 11 is a vertical sectional view showing another laminated rubber of a non-uniform sectional type;
Fig. 12 is a horizontal sectional view showing a vertical center portion of the laminated rubber of Fig. 11;
Fig. 13 is a vertical sectional view showing a further laminated rubber of a non-uniform type;
Fig. 14 is a horizontal sectional view showing a vertical center portion of the laminated rubber of Fig. 13;
Fig. 15 is a horizontal sectional view showing a vertical center portion of the laminated rubber of Fig. 13 in case where the center portion is formed in a rectangular form;
Fig. 16 is a vertical sectional view showing a laminated rubber of a stripe type;
Fig. 17 is a horizontal sectional view showing a vertical center portion of the laminated rubber of Fig. 16;
Fig. 18 is a vertical sectional view showing another laminated rubber of a stripe type;
Fig. 19 is a horizontal sectional view showing a vertical center portion of the laminated rubber of Fig. 18;
Fig. 20 is a vertical sectional view showing a further laminated rubber of a stripe type;
Fig. 21 is a horizontal sectional view showing a vertical center portion of the laminated rubber of Fig. 20;
Fig. 22 is a horizontal sectional view showing the vertical center portion of the laminated rubber of Fig. 21 in case where the center portion is formed in a rectangular form;
Fig. 23 is a vertical sectional view showing a hollow laminated rubber of prior art;
Fig. 24 is a horizontal sectional view showing a vertical center portion of the laminated rubber of Fig. 23;
Figs. 25 and 26 are explanatory views for explaining the enlargement of deformation ability in the hollow laminated rubber of prior art, respectively;
Fig. 25 shows the case of solid laminated rubber; and
Fig. 26 shows the case of hollow laminated rubber.

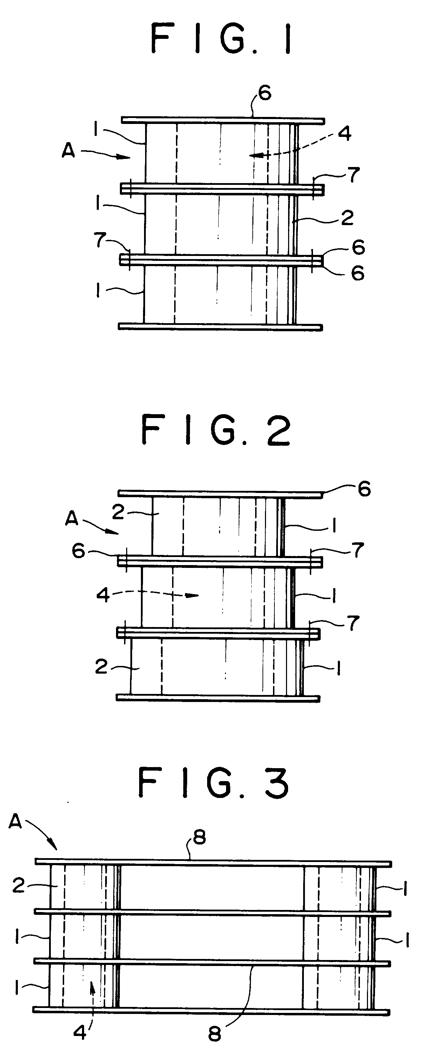

Fig. 1 shows a laminated rubber support in which each hollow laminated rubber 1 is connected by bolts 7 to each other in three stages through respective upper and lower connection plates 6 to form a laminated rubber support A. Instead of jointing two connection plates 6 with bolts, a horizontal connection plate may be inserted between the laminated rubbers 1 so that a plurality of laminated rubbers 1 and the connection plate between the laminated rubbers 1 can be preliminarily made in a monolithic form as well.

If a support having the same height or shearing stiffness is tried to be made from a single laminated rubber, buckling is produced in the laminated rubber since the height thereof is too large, and as a result, no large stroke can be obtained. On the contrary, when a plurality of hollow laminated rubbers 1 are connected to one another in multistage in a vertical direction, a laminated rubber support making full use of each deformation ability and having a low stiffness and a large stroke can be obtained. Since the hollow laminated rubber 1 is used, a large stroke can be obtained in less stages as a support, in comparison with the case where solid laminated rubbers are connected in multistage. In addition, since the number of the stages is also small, an overall height thereof can be controlled in a low height, resulting in the formation of a laminated rubber support A having a practical long period. Figs. 25 and 26 show the comparison of the respective deformation abilities between a solid laminated rubber 1' and a hollow laminated rubber 1. A displacement can be enlarged up to δ₁ in the hollow laminated rubber 1, in comparison with a displacement δ₀ per each stage in the solid laminated rubber 1' with respect to the same cross section of the laminated rubber by making the laminated rubber hollow. Incidentally, in the figures D₀ shows an outer diameter of the laminated rubber 1' in case of solid laminated rubber and D₁ shows an outer diameter of the laminated rubber 1 in case of hollow laminated rubber.

Fig. 2 shows a laminated rubber support as another preferred embodiment. In the support A shown in Fig. 1, the hollow laminated rubber 1 having the same diameter in each stage is used. On the contrary, in this preferred embodiment, the outer diameter of an upper laminated rubber 1 is arranged so as to be less than that of a lower laminated rubber. Since the outer diameter of the upper laminated rubber 1 is small, a vertical load is transmitted under the condition of less flexural deformation even when the support is deformed in a horizontal direction, and the improvement of stability and buckling strength can be attained as a laminated rubber support A.

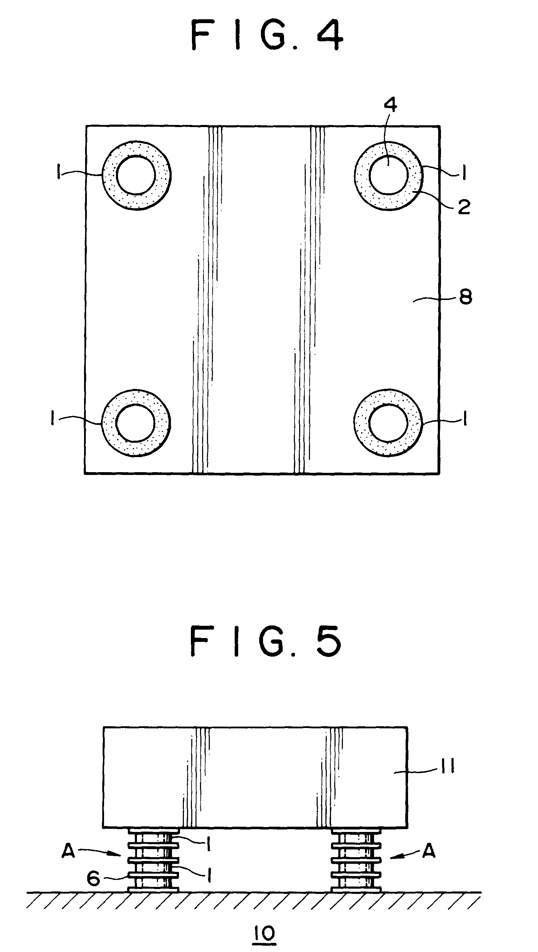

Figs. 3 and 4 show a further preferred embodiment of support. In this preferred embodiment, a plurality of hollow laminated rubbers 1 are connected to each other in a plurality of stages in a vertical direction and horizontally by horizontal connection plates 8 having the size capable of connecting the respective laminated rubbers 1. Since the laminated rubbers 1 at each stage are connected to each other through the large connection plate 8, the horizontal level at each stage is kept even when a horizontal displacement happens to each laminated rubber 1, and as a whole, a laminated rubber support A having an extremely stabilized construction is formed.

Figs. 5 through 8 show preferred embodiments of vibration control devices for structures in which the above-mentioned laminated rubber support is used.

Fig. 5 shows a preferred embodiment in case of DD, and an additional mass body 11 is supported by four pieces of the laminated rubber supports A (only two pieces on this side are shown) on a structure 10. The laminated rubber supports A attain to be the supports having the large stroke and the long period corresponding to the natural period of the structure by the superposition of the single laminated rubber 1 on a plurality of stages in a vertical direction.

In case a mass of the structure 10 on which the device is mounted is expressed as m₁, a mass of the additional mass body 11 is expressed as m_{d}, a spring constant of the main body of the structure is expressed as k₁, a spring constant of the laminated rubber support A is expressed as k_{d}, and a damping coefficient is expressed as c_{d}, respectively, the intrinsic angular frequency of the structure 10 constructing a main vibration system is given by:${\text{ω}}_{\text{1}} {\text{= (k}}_{\text{1}} {\text{/ m}}_{\text{1}} {\text{)}}^{\text{1/2}}$

The mass m_{d} of the additional mass body 11 constructing a vibration absorption system is designed so that the ratio of the mass m_{d} to the main m₁ of the structure 10 may be${\text{µ = m}}_{\text{d}} {\text{/ m}}_{\text{1}} \text{≧ 0.01}$ and at this time, the intrinsic angular frequency of the vibration absorption system is given by:${\text{ω}}_{\text{d}} {\text{= (1 / 1 + µ) ω}}_{\text{1}}$

Then, the damping coefficient c_{d} and the damping factor h_{d} are expressed by:${\text{c}}_{\text{d}} {\text{= 2 m}}_{\text{d}} {\text{ω}}_{\text{d}} {\text{h}}_{\text{d}}$${\text{h}}_{\text{d}} {\text{= [3µ / 8 (1+ µ)]}}^{\text{1/2}}$

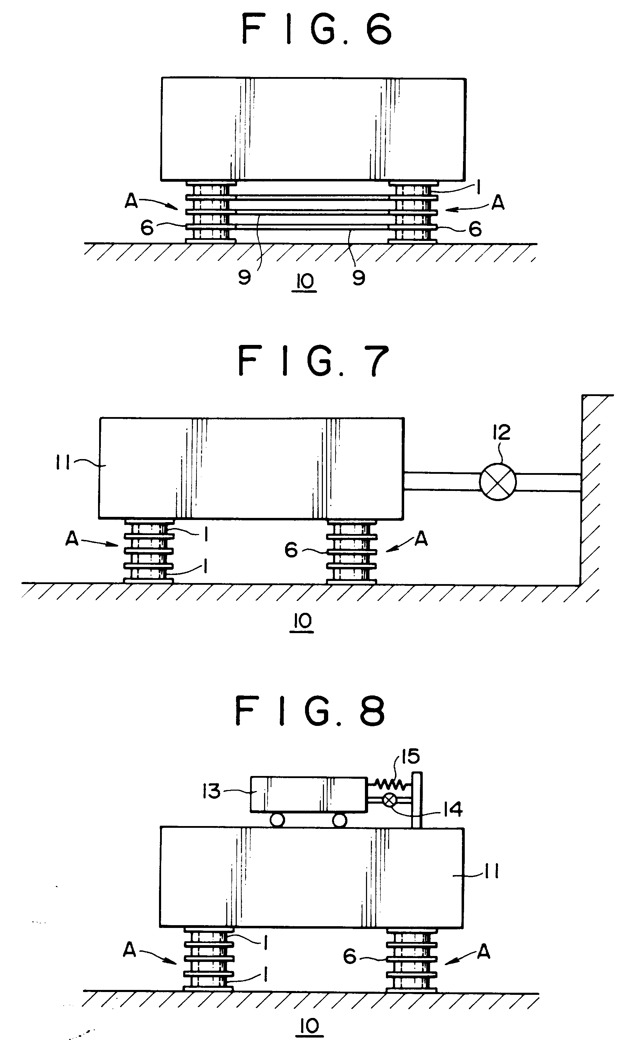

Fig. 6 shows the preferred embodiment similarly in case of DD, connection plates 9 made of steel plates or the like are connected in a horizontal direction between the upper and lower connection plates 6 of the mutually adjacent laminated rubber supports A as a spring element of DD in the preferred embodiment to give a construction with high stability in similar to that of the laminated rubber support A shown in Figs. 3 and 4.

Fig. 7 shows the preferred embodiment in case of either AMD or HMD, and a control force u(t) due to an oil pressure from an actuator 12 or an electromagnetic force or the like is applied to the additional mass body 11 placed on the laminated rubber supports A formed by the laminated rubbers 1 in multistage to actively control the vibration of the structure.

In AMD, the spring (laminated rubber 1) between the main body of the structure 10 and the additional mass body 11 constructing the vibration control device is kept in a soft stage, e.g.,${\text{ω}}_{\text{d}} {\text{≦(1 / 2) ω}}_{\text{1}}$ and then, the control force u(t) is given in the form of a following equation.${\text{u(t) = G}}_{\text{1}} {\text{(dx}}_{\text{1}} {\text{/ dt) + G}}_{\text{2}} {\text{(dx}}_{\text{d}} \text{/ dt)}$

Wherein x₁ is a displacement of the structure 10 and x_{d} is a displacement of a first added mass body. G₁ shows a gain in a circuit including an AGC circuit or the like to the response speed of the structure and the correspondences from a large input to a small are attained. Furthermore, the second term in the above equation gives a damping property to the additional mass body side by adding a product resulting from multiplying a gain G₂ (minus sign) by the vibration speed of the additional mass body side to the control force, and more stabilization is attained.

In case of HMD, the spring constant k_{d} is set so that the vibration of the additional mass body 11 may be synchronized with the vibration of the structure 10, that is:${\text{ω}}_{\text{d}} {\text{= ω}}_{\text{1}}$ and the control force u(t) is given in the form of a following equation, e.g.,${\text{u(t) = G}}_{\text{1}} {\text{(dx}}_{\text{1}} {\text{/dt) + G}}_{\text{2}} {\text{(dx}}_{\text{d}} {\text{/ dt) + G}}_{\text{3}} {\text{(x}}_{\text{1}} {\text{- x}}_{\text{d}} \text{)}$ wherein G₃ is a gain having a minus sign, and a part of the inertial force acting on the additional mass body 11 at the vibration time is canceled by the third term so as to allow the additional mass body 11 to vibrate by a small control force.

Fig. 8 shows a preferred embodiment in case of DMD. A second additional mass body 13 having a predetermined mass m_{b} is further provided to the additional mass body 11 having the predetermined mass mₐ and the control force u(t) is added by an actuator 14 between the first additional mass body 11 and the second additional mass body 13 to actively control the vibration of the structure. DMD corresponds to what doubly constructs DD and either AMD or HMD, and a large vibration control effect can be obtained by a small control force. In such a construction, the application to the structure having a long period is possible by supporting the additional mass body 11 by means of the laminated rubber support A formed by the superposition of the hollow laminated rubbers 1 in multistage, and since the deformation ability is also large, the resulting vibration control can be done effectively.

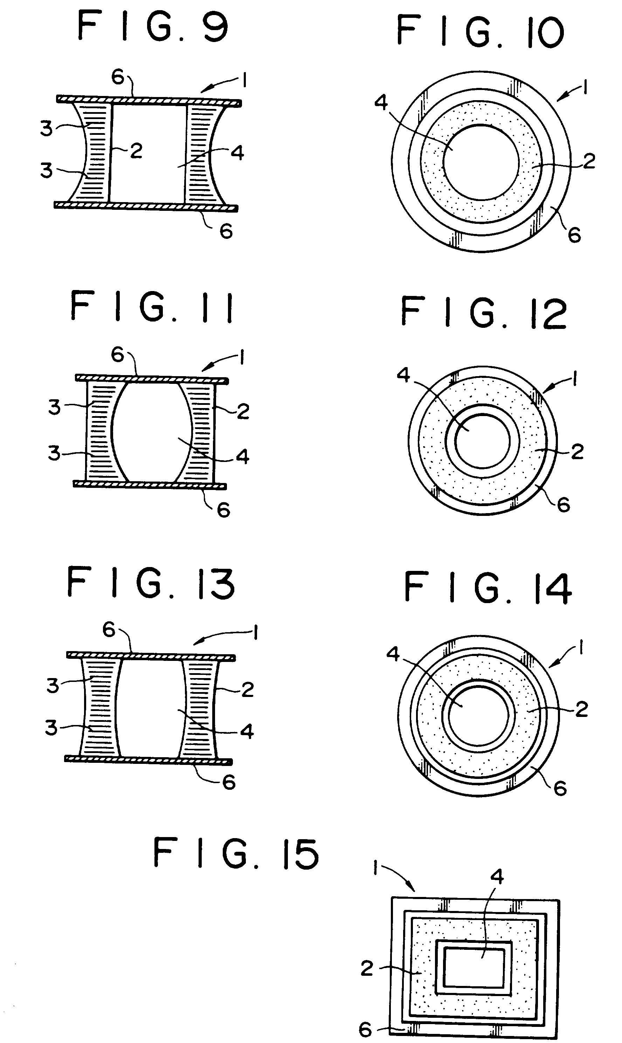

Figs. 9 through 22 show some modifications of the hollow laminated rubbers used in the laminated rubber supports of the present invention, respectively.

Each laminated rubber of the type used in Figs. 9 through 15 has non-uniform section (designated as a non-uniform section type) by forming a rubber 2 constructing the laminated rubber 1 in a ring shape, making the internal portion hollow and making the rubber 2 formed in a non-uniform section in a vertical direction so that, with respect to at least one of the inside and outside of the hollow laminated rubber 1, the width in the horizontal section from the central portion to both ends in a vertical direction may gradually enlarge. Since the width of the laminated rubber 1 is spread to the inside or outside towards both vertical ends acted by a large bending moment in the installation state, the bucking strength of the laminated rubber 1 is increased to fully make use of the deformation ability of the hollow laminated rubber 1.

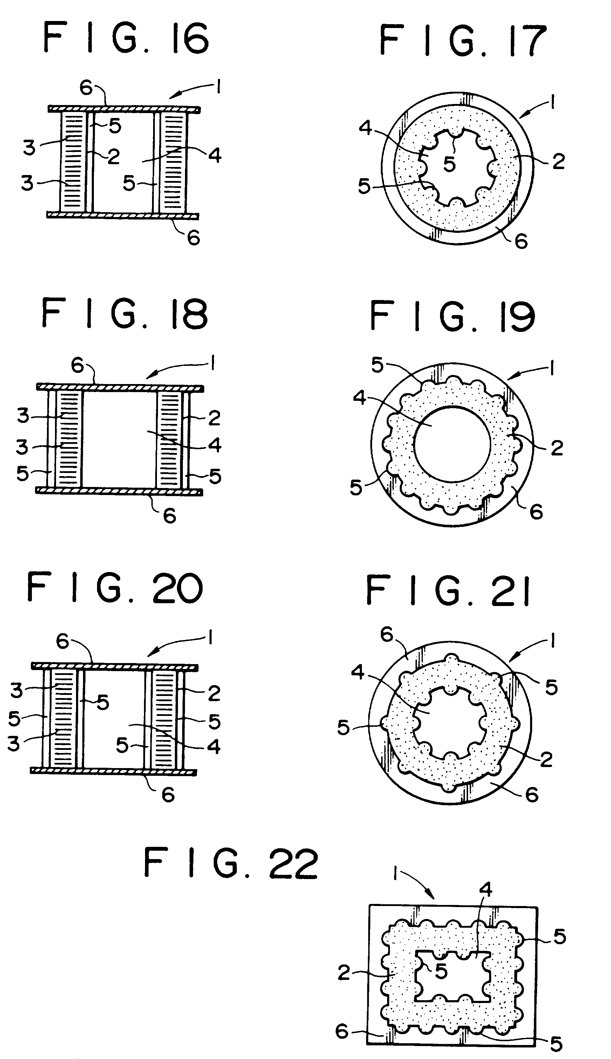

The preferred embodiment of Figs. 9 and 10 shows what forms the hollow laminated rubber 1 by horizontally embedding a plurality of ring-shaped steel plate 3 in the hollow rubber 2 formed in a ring shape to prepare the hollow laminated rubber 1 and to set the outside of the laminated rubber 1 as a non-uniform section. That is, the outside of the laminated rubber 1 is continuously spread from the vertical central portion to both vertical ends. The connection plate 6 made of steel plate is integrally mounted on the upper and lower ends of the laminated rubber, and the connection plate 6 is jointed to a lower structural body and an upper or lower structural body when the connection plate is installed. When bolt holes (not shown) are formed in the connection plates, the connection plates 6 can be fixed to the lower structural body and the upper and lower structural body by bolted joint. Likewise, the inside of the laminated rubber 1 is made a non-uniform section in Figs. 11 and 12, and the inside and the outside of the laminated rubber 1 are made both non-uniform sections in Figs. 13 through 15. Figs. 9 through 14 show the case where the outer shape of the laminated rubber 1 in the horizontal section is circular, but Fig. 15 shows a case where the outer shape of the laminated rubber 1 is rectangular. In case where the outer shape is circular, the shearing stiffnesses of the laminated rubbers are all the same. On the other hand, where the outer shape of the laminated rubber is made rectangular or elliptic, the shearing stiffness can be varied depending on the direction. For example, in case where the natural period of the structure as a base isolation or seismic response control object becomes largely different depending on the direction thereof, effective base isolation and seismic response control become possible by altering the shearing stiffness depending on the direction. Even with respect to the non-uniform section of the inside shown in Figs. 9 and 10 and the non-uniform section of the outside shown in Figs. 11 and 12, it is possible to make the outer shape of the laminated rubber 1 rectangular or elliptic to give the laminated rubber 1 having the directionality.

In an illustrated embodiment, the steel plates 3 in a ring shape are also embedded into the hollow rubber 2, but any disk-type steel plates with no hole may be used so as to divide the hollow portion 4 within the rubber 2 without using the ring-shaped steel plates. It may be considered to use all the disk-type plates instead of the steel plates in the laminated rubber 1, but disk-type steel plates may be used every several sheets between the ring-shaped steel plates. By intervening some disk-type steel plates, and local deformations are hardly made, and it may be considered that more stable construction will be obtained.

Each laminated rubber of the type shown in Figs. 16 through 22 is what forms the rubber 2 constructing the laminated rubber 1 to make the internal portion hollow and also forms a plurality of projections 5 (designated as a projection type thereafter) in a vertical direction at least on one side of the internal and external surfaces of the resulting laminated rubber. The projection 5 in a vertical direction plays a stiffness rib's role on the buckling of the hollow laminated rubber 1 to fully make use of deformation ability of the hollow laminated rubber 1. The preferred embodiment shown in Figs. 16 and 17 is what forms a plurality of projections 5 in a vertical direction on the internal surface of the hollow laminated rubber 1 and the projections 5 play a stiffening rib's role on the buckling. Therefore, it is possible to fully make use of the deformation ability of the hollow laminated rubber 1 with a low shearing stiffness by improving the buckling strength in this manner. Likewise, a plurality of projections 5 are formed on the external surface of the laminated rubber 1 in the preferred embodiment shown in Figs. 18 and 19. In case of the preferred embodiment shown in Figs. 20 through 22, the projections 5 are formed on the internal and external surfaces of the laminated rubber. Figs. 16 through 21 show the case where the outer shape of the laminated rubber 1 in a horizontal section is circular, but Fig. 22 shows the case where the outer shape is rectangular. In case of providing the projections 5 on the internal surface of the laminated rubber 5 shown in Figs. 16 and 17, and even in case of providing the projections 5 on the external surface of the laminated rubber 1 shown in Fig. 18 and 19, the laminated rubber 1 having the directionality can be prepared by making the outer shape of the laminated rubber 1 rectangular or elliptic. In similar to the case of the non-uniform section type shown in Figs. 9 through 15, the hollow portion 4 within the rubber 2 may be divided by using the disk-type steel plates with no holes, instead of the ring-shaped steel plates.

## Claims

1. A combination comprising a structure (10), an additional mass body (11) and a spring (A), the additional mass body (11) and the spring (A) constituting a vibration control device for the structure (10) in the form of a dynamic damper, in which the additional mass body (11) having a predetermined mass (m_{d}) as a vibration absorption system is connected to the structure (10) having a known mass (m₁) for constructing a main vibration system by way of the spring (A), which has a predetermined spring constant (k_{d}), and which has a period synchronizing with the natural period of the main vibration system,
characterised in that:
(a) the spring (A) comprises a laminated rubber support (A) formed by connecting laminated rubbers (1) to each other in a plurality of stages in a vertical direction by means of horizontal connection plates (6), at least some of the laminated rubbers (1) being ring-shaped with a hollow internal portion (4);
(b) the laminated rubber support constituting the said spring (A) is installed at a predetermined position on the structure (10); and
(c) the additional mass body (11) is mounted on the laminated rubber support (A).

2. A combination comprising a structure (10), an additional mass body (11), a spring (A) and an actuator (12), the additional mass body (11), the spring (A) and the actuator (12) constituting an active type vibration control device for the structure (10), in which control device the actuator (12) for applying a control force (u(t)) corresponding to the vibration of the structure (10) having a known mass (m₁) is intervened between the structure (10) and the additional mass body (11) having a predetermined mass (m_{d}),
characterised in that:
(a) the spring (A) comprises a laminated rubber support (A) formed by connecting laminated rubbers (1) to each other in a plurality of stages in a vertical direction by means of horizontal connection plates (6), at least some of the laminated rubbers (1) being ring-shaped with a hollow internal portion (4);
(b) the laminated rubber support constituting the said spring (A) is installed at a predetermined position on the structure (10); and
(c) the additional mass body (11) is mounted on the laminated rubber support (A).

3. A combination as claimed in claim 2, wherein the period of the laminated rubber support (A) is set fully longer than the natural period of the structure (10).

4. A combination as claimed in claim 2, wherein the period of the laminated rubber support (A) is set so as to synchronize with the natural period of the structure (10).

5. A combination comprising a structure (10), a first additional mass body (11),a second additional mass body (13) movably mounted on the first additional mass body (11), a spring (A) and an actuator (14), the additional mass bodies (11,13), the spring (A) and the actuator constituting an active type vibration control device for the structure (10), in which the control device actuator (14) for applying a control force (u(t)) corresponding to the vibration of the structure (10) having a known mass (m₁) is intervened between the first additional mass body (11) having a predetermined mass (mₐ) and the second additional mass body (13) having a predetermined mass (m_{b}),
characterised in that:
(a) the spring (A) comprises a laminated rubber support (A) formed by connecting laminated rubbers (1) to each other in a plurality of stages in a vertical direction by means of horizontal connection plates (6), at least some of the laminated rubbers (1) being ring-shaped with a hollow internal portion (4);
(b) the laminated rubber support constituting the said spring (A) is installed at a predetermined position on the structure (10); and
(c) the first additional mass body (11) is mounted on the laminated rubber support (A).

6. A combination as claimed in any preceding claim, wherein a plurality of laminated rubber supports (A) are connected by horizontal connection plates (9).

7. A combination according to any preceding claim, wherein at least one of the inside and the outside of at least one laminated rubber (1) is made to be a non-uniform section in a vertical direction so that the width in a horizontal section gradually increases from the vertical central portion to both vertical ends.

8. A combination as claimed in any preceding claim, wherein at least one of the internal and external surfaces of at least one laminated rubber (1) has a plurality of projections (5) in a vertical direction.

9. A combination as claimed in any preceding claim, wherein the outer diameter of an upper laminated rubber (1) is made smaller than that of a lower laminated rubber (1).

10. A combination as claimed in any preceding claim, wherein some of the laminated rubbers (1) are solid laminated rubbers with no hollow portion.

## Patentansprüche

1. Kombination, die eine Struktur (10), einen zusätzlichen Massekörper (11), und eine Feder (A) aufweist, wobei der zusätzliche Massekörper (11) und die Feder (A) eine Schwingungssteuervorrichtung für die Struktur (10) in Form eines dynamischen Dämpfers darstellen, bei der der zusätzliche Massekörper (11), der eine vorgegebene Masse (m_{d}) hat, als Schwingungsabsorptionssystem mit der Struktur (10), die eine bekannte Masse (m₁) hat, über die Feder (A), die eine vorgegebene Federkonstante (k_{d}) hat, und die eine mit der Eigenperiode des Hauptschwingungssystems übereinstimmende Periode hat, verbunden ist, um ein Hauptschwingungssystem zu bilden,
dadurch gekennzeichnet, daß:
(a) die Feder (A) eine Gummilaminat-Auflage (A) aufweist, die durch Verbinden von Gummilaminaten (1) in einer Vielzahl von Stufen in der vertikalen Richtung mittels horizontaler Verbindungsplatten (6) gebildet ist, wobei mindestens einige der Gummilaminate (1) ringförmig sind und einen hohlen inneren Bereich (4) haben;
(b) die Gummilaminat-Auflage, die die Feder (A) bildet, bei einer vorgegebenen Position auf der Struktur (10) angebracht ist; und
(c) der zusätzliche Massekörper (11) auf der Gummilaminat-Auflage (A) befestigt ist.

2. Kombination, die eine Struktur (10), einen zusätzlichen Massekörper (11), eine Feder (A), und ein Betätigungsorgan (12) aufweist, wobei der zusätzliche Massekörper (11), die Feder (A) und das Betätigungsorgan (12) eine Schwingungssteuervorrichtung vom aktiven Typ für die Struktur (10) darstellen, wobei bei dieser Steuervorrichtung das Betätigungsorgan (12) zur Übertragung einer Steuerkraft (u(t)). die der Schwingung der Struktur (10) mit einer bekannten Masse (m₁) entspricht, zwischen der Struktur (10) und dem zusätzlichen Massekörper (11) mit einer vorgegebenen Masse (m_{d}) angeordnet ist,
dadurch gekennzeichnet, daß:
(a) die Feder (A) eine Gummilaminat-Auflage (A) aufweist, die durch Verbinden von Gummilaminaten (1) in einer Vielzahl von Stufen in der vertikalen Richtung mittels horizontaler Verbindungsplatten (6) gebildet ist, wobei mindestens einige der Gummilaminate (1) ringförmig sind und einen hohlen inneren Bereich (4) haben;
(b) die Gummilaminat-Auflage, die die Feder (A) bildet, bei einer vorgegebenen Position auf der Struktur (10) angebracht ist; und
(c) der zusätzliche Massekörper (11) auf der Gummilaminat-Auflage (A) befestigt ist.

3. Kombination gemäß Anspruch 2, wobei die Periode der Gummilaminat-Auflage (A) wesentlich länger als die Eigenperiode der Struktur (10) eingestellt ist.

4. Kombination gemäß Anspruch 2, wobei die Periode der Gummilaminat-Auflage (A) so eingestellt ist, daß sie mit der Eigenperiode der Struktur (10) übereinstimmt.

5. Kombination, die eine Struktur (10), einen ersten zusätzlichen Massekörper (11), einen zweiten zusätzlichen Massekörper (13), der auf dem ersten zusätzlichen Massekörper (11) beweglich angebracht ist, eine Feder (A), und ein Betätigungsorgan (14) aufweist, wobei die zusätzlichen Massekörper (11, 13), die Feder (A) und das Betätigungsorgan (14) eine Schwingungssteuervorrichtung vom aktiven Typ für die Struktur (10) darstellen, wobei bei dieser Steuervorrichtung das Betätigungsorgan (14) zur Übertragung einer Steuerkraft (u(t)), die der Schwingung der Struktur (10) mit einer bekannten Masse (m₁) entspricht, zwischen dem ersten zusätzlichen Massekörper (11) mit einer vorgegebenen Masse (mₐ) und dem zweiten zusätzlichen Massekörper (13) mit einer vorgegebenen Masse (m_{b}) angeordnet ist,
dadurch gekennzeichnet, daß:
(a) die Feder (A) eine Gummilaminat-Auflage (A) aufweist, die durch Verbinden von Gummilaminaten (1) in einer Vielzahl von Stufen in der vertikalen Richtung mittels horizontaler Verbindungsplatten (6) gebildet ist. wobei mindestens einige der Gummilaminate (1) ringförmig sind und einen hohlen inneren Bereich (4) haben;
(b) die Gummilaminat-Auflage, die die Feder (A) bildet, bei einer vorgegebenen Position auf der Struktur (10) angebracht ist; und
(c) der erste zusätzliche Massekörper (11) auf der Gummilaminat-Auflage (A) befestigt ist.

6. Kombination gemäß irgendeinem vorhergehenden Anspruch, wobei eine Vielzahl von Gummilaminat-Auflagen (A) durch horizontale Verbindungsplatten (9) verbunden ist.

7. Kombination gemäß irgendeinem vorhergehenden Anspruch, wobei mindestens die innere oder äußere Seite von mindestens einem Gummilaminat (1) in der vertikalen Richtung einen ungleichmäßigen Schnitt hat, wobei die Breite in einem horizontalen Schnitt von dem vertikalen mittleren Bereich bis zu beiden vertikalen Enden allmählich zunimmt.

8. Kombination gemäß irgendeinem vorhergehenden Anspruch, wobei mindestens eine der inneren oder äußeren Oberflächen von mindestens einem Gummilaminat (1) eine Vielzahl von Vorsprüngen (5) in einer vertikalen Richtung hat.

9. Kombination gemäß irgendeinem vorhergehenden Anspruch, wobei der äußere Durchmesser eines oberen Gummilaminats (1) kleiner gemacht ist als der äußere Durchmesser eines unteren Gummilaminats (1).

10. Kombination gemäß irgendeinem vorhergehenden Anspruch, wobei einige der Gummilaminate (1) massive Gummilaminate ohne einen hohlen Bereich sind.

## Revendications

1. Combinaison comprenant une structure (10), un corps de masse supplémentaire (11) et un ressort (A), le corps de masse supplémentaire (11) et le ressort (A) constituant un dispositif de contrôle des vibrations pour la structure (10) sous la forme d'un amortisseur dynamique, dans laquelle le corps de masse supplémentaire (11), ayant une masse prédéterminée (m_{d}) comme système d'absorption des vibrations, est assemblé à la structure (10) ayant une masse connue (m₁) pour réaliser un système de vibration principal au moyen du ressort (A) qui a une constante élastique prédéterminée (k_{d}) et qui a une période en synchronisme avec la période naturelle du système de vibration principal,
caractérisée en ce que:
(a) le ressort (A) comprend un support stratifié en caoutchouc (A) obtenu en assemblant les uns aux autres des caoutchoucs stratifiés (1) dans plusieurs étages en direction verticale au moyen de plaques d'assemblage horizontales (6), au moins certains des caoutchoucs stratifiés (1) étant de forme annulaire avec une partie interne creuse (4);
(b) le support stratifié en caoutchouc constituant ledit ressort (A) est installé à une position prédéterminée sur la structure (10); et
(c) le corps de masse supplémentaire (11) est monté sur le support stratifié en caoutchouc (A).

2. Combinaison comprenant une structure (10), un corps de masse supplémentaire (11), un ressort (A) et un actionneur (12), le corps de masse supplémentaire (11), le ressort (A) et l'actionneur (12) constituant un dispositif de contrôle des vibrations de type actif pour la structure (10). dans lequel dispositif de contrôle l'actionneur (12), pour appliquer une force de contrôle (u(t)) correspondant à la vibration de la structure (10) ayant une masse connue (m₁), est interposé entre la structure (10) et le corps de masse supplémentaire (11) ayant une masse prédéterminée (m_{d}),
caractérisée en ce que:
(a) le ressort (A) comprend un support stratifié en caoutchouc (A) obtenu en assemblant les uns aux autres des caoutchoucs stratifiés (1) dans plusieurs étages en direction verticale au moyen de plaques d'assemblage horizontales (6), au moins certains des caoutchoucs stratifiés (1) étant de forme annulaire avec une partie interne creuse (4);
(b) le support stratifié en caoutchouc constituant ledit ressort (A) est installé à une position prédéterminée sur la structure (10); et
(c) le corps de masse supplémentaire (11) est monté sur le support stratifié en caoutchouc (A).

3. Combinaison selon la revendication 2, dans laquelle la période du support stratifié en caoutchouc (A) est choisie nettement plus grande que la période naturelle de la structure (10).

4. Combinaison selon la revendication 2, dans laquelle la période du support stratifié en caoutchouc (A) est choisie de manière à être en synchronisme avec la période naturelle de la structure (10).

5. Combinaison comprenant une structure (10). un premier corps de masse supplémentaire (11), un deuxième corps de masse supplémentaire (13), monté de manière mobile sur le premier corps de masse supplémentaire (11), un ressort (A) et un actionneur (14), les corps de masse supplémentaire (11, 13), le ressort (A) et l'actionneur constituant un dispositif de contrôle des vibrations de type actif pour la structure (10), dans lequel dispositif de contrôle l'actionneur (14), pour appliquer une force de contrôle (u(t)) correspondant à la vibration de la structure (10) ayant une masse connue (m₁), est interposé entre le premier corps de masse supplémentaire (11) ayant une masse prédéterminée (mₐ) et le deuxième corps de masse supplémentaire (13) ayant une masse prédéterminée (m_{b}),
caractérisée en ce que:
(a) le ressort (A) comprend un support stratifié en caoutchouc (A) obtenu en assemblant les uns aux autres des caoutchoucs stratifiés (1) dans plusieurs étages en direction verticale au moyen de plaques d'assemblage horizontales (6), au moins certains des caoutchoucs stratifiés (1) étant de forme annulaire avec une partie interne creuse (4);
(b) le support stratifié en caoutchouc constituant ledit ressort (A) est installé à une position prédéterminée sur la structure (10); et
(c) le corps de masse supplémentaire (11) est monté sur le support stratifié en caoutchouc (A).

6. Combinaison selon l'une quelconque des revendications précédentes, dans laquelle plusieurs supports stratifiés en caoutchouc (A) sont assemblés par des plaques d'assemblage horizontales (9).

7. Combinaison selon l'une quelconque des revendications précédentes, dans laquelle au moins soit l'intérieur, soit l'extérieur d'au moins un caoutchouc stratifié (1) est disposé avec une section non uniforme dans la direction verticale, de façon que la largeur dans une section horizontale augmente graduellement depuis la partie centrale verticale vers les deux extrémités verticales.

8. Combinaison selon l'une quelconque des revendications précédentes, dans laquelle au moins soit la surface interne, soit la surface externe d'au moins un caoutchouc stratifié (1) a plusieurs saillies (5) en direction verticale.

9. Combinaison selon l'une quelconque des revendications précédentes, dans laquelle le diamètre extérieur d'un caoutchouc stratifié supérieur (1) est plus faible que le diamètre d'un caoutchouc stratifié inférieur (1).

10. Combinaison selon l'une quelconque des revendications précédentes, dans laquelle certains des caoutchoucs stratifiés (1) sont des caoutchoucs stratifiés massifs sans partie creuse.
